Europäisches Patentamt

(19) European Patent Office

Office européen des brevets

(11) Publication number: **0 080 781**
**A1**

(12) **EUROPEAN PATENT APPLICATION**

(21) Application number: **82201516.0**

(22) Date of filing: **30.11.82**

(51) Int. Cl.³: **A 47 L 9/19**
**G 01 L 7/08, G 01 F 1/38**

(30) Priority: **01.12.81 NL 8105419**

(43) Date of publication of application:
**08.06.83 Bulletin 83/23**

(84) Designated Contracting States:
**DE FR GB IT SE**

(71) Applicant: **N.V. Philips' Gloeilampenfabrieken**
**Groenewoudseweg 1**
**NL-5621 BA Eindhoven(NL)**

(72) Inventor: **van der Meer, Sytze**
**c/o INT. OCTROOIBUREAU B.V. Prof. Holstlaan 6**
**NL-5656 AA Eindhoven(NL)**

(72) Inventor: **van den Brug, Lippe**
**c/o INT. OCTROOIBUREAU B.V. Prof. Holstlaan 6**
**NL-5656 AA Eindhoven(NL)**

(74) Representative: **Bos, Kornelis Sjoerd et al,**
**INTERNATIONAAL OCTROOIBUREAU B.V.**
**Prof.Holstlaan 6**
**NL-5656 AA Eindhoven(NL)**

(54) **Vacuum cleaner.**

(57) The invention relates to a vacuum cleaner comprising a pressure-sensitive device for indicating the degree of suction prevailing in the suction tube means of the cleaner. The device is arranged in the suction tube means and comprises a pressure-sensitive element, such as a diaphragm, to which an indicator is coupled. The invention provides a construction by which the pressure difference between two different locations in the suction tube means is transmitted to the pressure-sensitive element. The results in a displacement of the indicator which is a measure of the air velocity and hence an indication of the degree of suction prevailing.

FIG. 2

EP 0 080 781 A1

"Vacuum cleaner".

       The invention relates to a vacuum cleaner which comprises a housing containing a suction unit and a dust filter, suction tube means of which one end is constructed for connection to a suction opening in the housing and the other end is constructed for the connection of a suction nozzle thereto, and a pressure-sensitive device for indicating the degree of suction prevailing at a given point in the suction tube means, which pressure-sensitive device is connected to the suction tube means and is provided with a pressure-sensitive element to which an indicator is coupled.

       Such a vacuum cleaner is known from Netherlands Patent No. 157 202 (PHN 6437). The suction indicator described therein measures and indicates the pressure difference between the air in the suction tube means and the ambient atmosphere. When the suction is adequate a reduced pressure will exist in the suction tube means. As the dust bag fills, the reduced pressure more closely approximate to the ambient atmospheric pressure, so that the pressure difference is reduced. This is indicated by the indicator. However, if the suction tube means between the suction nozzle and the suction indicator becomes blocked, the pressure difference increases and the indicator indicates that there is adequate suction. This is misleading because the cleaner cannot now operate effectively. Also known are vacuum cleaners in which the suction indicator indicates the pressure difference across the dust filter. This indicator has the same disadvantage.

       The vacuum cleaner according to the invention is characterized in that one side of the pressure-sensitive element bounds a just space which communicates with the interior of the suction tube means at a first location therein and the other side bounds a second space which communicates with the interior of the suction tube means at the location of a construction in the suction tube means, which location is spaced along the suction tube means from the first location therein.

At the location of the constriction the air velocity is higher and the pressure is therefore lower. The loss of pressure between the two different locations in the suction tube means is indicated by means of an indicator coupled to the pressure-sensitive element. As the dust filter becomes more clogged the air velocity in the suction tube means will decrease. The pressure difference will also decrease, which is indicated by the indicator. If the suction tube means become blocked by some object, the air velocity is low, the pressure difference is also small, and the indicator indicates that the suction is weak, so that the user knows that the vacuum cleaner is no longer operating effectively. When the indicator suddenly indicates that the suction power is weak, this is a sign for the user that the suction tube means are blocked.

A preferred embodiment of the invention is characterized in that the pressure-sensitive device is arranged in a hollow grip which constitutes a connection between a suction tube and a suction hose of the suction tube means.

An embodiment of the invention will now be described in more detail, by way of example, with reference to drawings.

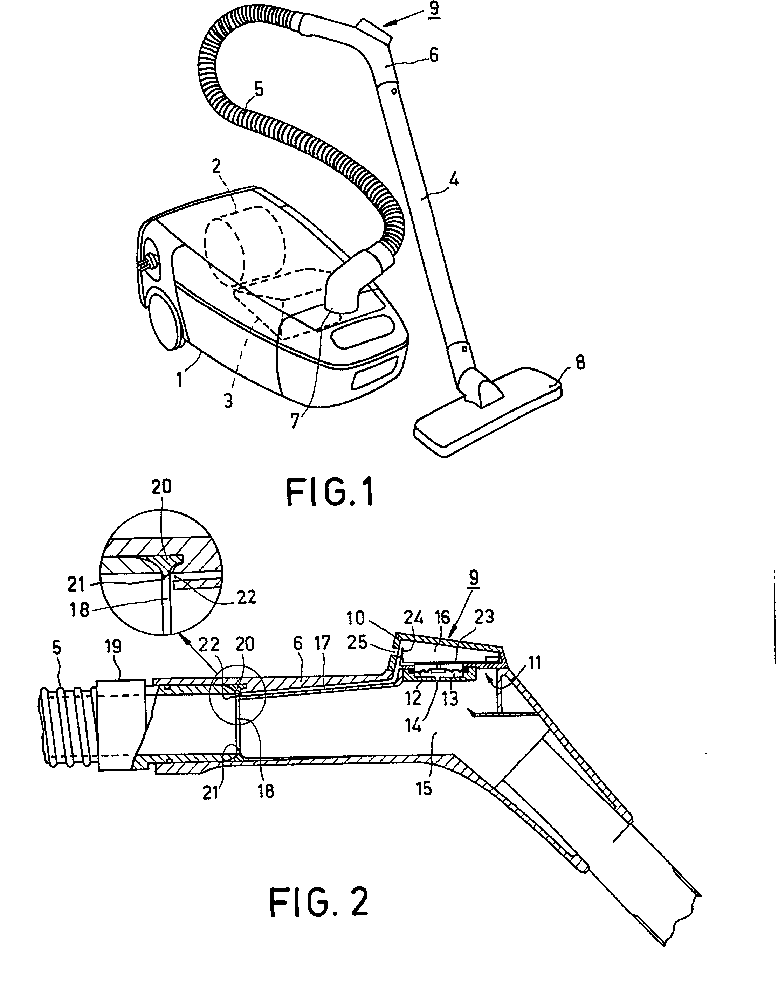

Figure 1 is a perspective view of a vacuum cleaner;

Figure 2 is a sectional view of the grip in which the pressure-sensitive indicator is arranged.

The housing 1 of the vacuum cleaner accommodates a suction unit 2 and a dust filter 3. The suction tube means comprise a rigid suction tube 4 and a flexible suction hose 5, which are interconnected by a hollow grip 6. The suction hose is connected to a suction opening 7 in the housing 1 and a suction nozzle 8 is coupled to

the suction tube. A pressure-sensitive device 9 for indicating the strength of the suction is connected to the grip 6. The pressure-sensitive device comprises a housing 10 which is arranged in an opening 11 in the grip. Inside the housing 10 a diaphragm 12 is peripherally clamped between two sections of the housing. The diaphragm divides the interior of the housing into two spaces 13 and 16. *Via* an opening 14 the space 13 communicates with the interior of the grip at a location 15 therein. *Via* a duct 17 the space 16 also communicates with the interior of the grip but at the location of a constriction 18 where the cross-sectional area of the passage through the grip is smaller than the cross-sectional area at the location 15, the constriction 18 being situated downstream of the location 15 with respect to the direction of the flow of air through the suction tube means. The duct 17 is formed in the wall of the grip. The suction hose 5 is connected to the grip 6 by means of a coupling union 19 which is inserted into the grip. For the purpose of dust sealing a sealing ring 20 is fitted between the end of the coupling union and the inner surface of the wall of the grip. This sealing ring has a circumferentially extending, inwardly projecting portion 21 against which the end of the coupling union is positioned. The portion 21 forms the constriction 18. The open end 22 of the duct 17 is situated at the location of the constriction and is oriented in the direction in which the air flows through the grip. This results in a minimal pressure at the location of the constriction. The distance between the location 15 and the constriction 18 also influences the pressure difference. The pressure difference increases as this distance increases. In the present embodiment this distance is approximately 10 cm. This results in an additional, though small, pressure difference.

A leaf spring 23 is secured intermediate its ends to the centre of the diaphragm 12. One end of the leaf spring is clamped in the housing 10 of the pressure-sensitive device. The other, free end of the leaf spring is bent up at a right angle and forms an indicator 24, which

0080781

is visible through a window 25 in the housing 10.

During use of the vacuum cleaner a pressure P1 prevails at the location 15 and hence in the space 13 of the pressure-sensitive device, whilst at the location of the constriction 18 and, _via_ the duct 17, in the space 16 also a pressure P2 prevails. If there is adequate suction the pressure P2 will be lower than the pressure P1. The pressure difference P1-P2 causes a displacement of the diaphragm 12. The leaf spring 23 with the indicator 24, consequently moves upwards so that the degree of suction prevailing can be read through the window 25. The pressure difference P1-P2 is a measure of the air velocity in the suction tube means and hence an indication of the degree of suction prevailing. After some time the dust filter becomes increasingly clogged and the suction decreases. As a result of this, the pressure difference P1-P2 also decreases and the indicator 24 moves slightly downwards. When the dust filter is almost completely clogged the pressure difference is so small that the suction is inadequate for further effective operation of the cleaner. The indicator is then in the lowermost position. This also occurs when the suction tube means are blocked by some object.

In this way the indicator, which may be a coloured indicator, for example, directly indicates the strength of the suction.

## CLAIMS

1.       A vacuum cleaner which comprises a housing containing a suction unit and a dust filter, suction tube means of which one end is constricted for connection to a suction opening in the housing and the other end is constricted for the connection of a suction nozzle thereto, and a pressure-sensitive device for indicating the degree of suction prevailing at a given point in the suction tube means, which pressure-sensitive device is connected to the suction tube means and is provided with a pressure-sensitive element to which an indicator is coupled, characterized in that one side of the pressure-sensitive element bounds a first space which communicates with the interior of the suction tube means at a first location therein and the other side bounds a second space which communicates with the interior of the suction tube means at the location of a constriction in the suction tube means, which location is spaced along the suction tube means from the first location therein.

2.       A vacuum cleaner as claimed in Claim 1, characterized in that the pressure-sensitive device is arranged in a hollow grip which constitutes a connection between a suction tube and a suction hose of the suction tube means.

3.       A vacuum cleaner as claimed in Claim 2, characterized in that the communication between the second space of the pressure-sensitive element and the suction tube means comprises a duct which is formed in the wall of the grip.

4.       A vacuum cleaner as claimed in Claim 3, characterized in that an open end of the duct is situated at the location of the constriction and is oriented in the direction in which the air flows through the constriction.

5.       A vacuum cleaner as claimed in Claim 4, characterized in that a coupling union is connected to the suction hose and fits in the hollow grip, and that the constriction is formed by a circumferentially extending, inwardly projecting portion of a sealing ring arranged between the coupling union and the grip.

6.        A vacuum cleaner as claimed in any of Claims 2 to 5, characterized in that the pressure-sensitive device comprises a housing which is arranged in an opening in the grip and in which housing a diaphragm is peripherally clamped, which diaphragm is coupled to a leaf spring of which one end is clamped in the housing of the pressure-sensitive device and whose other end constitutes the indicator, which is visible through a window in said housing.

FIG.1

FIG. 2

PHN 10.205

## DOCUMENTS CONSIDERED TO BE RELEVANT

| Category | Citation of document with indication, where appropriate, of relevant passages | Relevant to claim | CLASSIFICATION OF THE APPLICATION (Int Cl ³) |
|---|---|---|---|
| Y | US-A-3 224 020 (RYUTARO MORI et al.) *Column 1, lines 35-72; column 2, lines 1-63; figure 1* | 1,6 | A 47 L 9/19 G 01 L 7/08 G 01 F 1/38 |
| Y | GB-A- 216 969 (STANLEY McCLATCHIE) *Page 2, lignes 104-129; figures 8-9* | 1,2 | |
| A | US-A-4 294 595 (BOWERMAN, L.E.) *Column 4, lines 8-68; column 5, lines 1-30; figures 1-3* | 1 | |
| A | US-A-3 130 586 (TAYLOR, W.S. et al.) *Column 5, lines 50-63; figure 6* | 1,6 | |
| A | US-A-3 595 080 (RANNENBERG, G.C.) | | |
| A | NL-A-6 609 416 (N.V.PHILIPS) | | |
| A | NL-A-6 609 415 (N.V.PHILIPS) | | |
| A | DE-C- 625 683 (DOERFLER, H.) | | |

TECHNICAL FIELDS
SEARCHED (Int Cl ³)

A 47 L
G 01 F

The present search report has been drawn up for all claims

| Place of search | Date of completion of the search | Examiner |
|---|---|---|
| THE HAGUE | 10-03-1983 | MUNZER E. |